# EUROPÄISCHE PATENTANMELDUNG

(11) **EP 2 006 054 A1**
(43) Veröffentlichungstag der Anmeldung: **24.12.2008**
(21) Anmeldenummer: 07012261.9
(22) Anmeldetag: 22.06.2007
(51) Int. Cl.: B25F 5/00, H01M 2/10

(54) **Vorrichtung zur Halterung von Akkuzellen bei Akkupack**

(71) Anmelder: Metabowerke GmbH, 72602 Nürtingen (DE)
(72) Erfinder: Schmid, Olaf, 70178 Stuttgart (DE); Däschler, Arttu, 73728 Esslingen (DE)
(74) Vertreter: Dreiss, Fuhlendorf, Steimle & Becker

(57) **Zusammenfassung**

Die Erfindung betrifft eine Vorrichtung 2 zur Halterung von Akkuzellen 4 bei einem Akkupack, insbesondere für ein Elektrohandwerkzeuggerät, mit einem ersten Halteteil 6 und einem zweiten Halteteil 8, die unter Zwischenordnung der Akkuzellen 4 fügbar und miteinander fixierbar sind. Sie zeichnen sich dadurch aus, dass in einer Fügerichtung 10 erstreckte Vorsprünge 12 des ersten Halteteils 6 mit einem nachgiebigen Außenumfang ausgebildet sind und so in Öffnungen 14 des zweiten Halteteils 8 einsteckbar und dort klemmschlüssig fixierbar sind.

## Beschreibung

Die Erfindung betrifft eine Vorrichtung zur Halterung von Akkuzellen bei einem Akkupack, insbesondere für ein Elektrohandwerkzeuggerät, mit einem ersten Halteteil und einem zweiten Halteteil, die unter Zwischenordnung der Akkuzellen fügbar und miteinander fixierbar sind.

Derartige Vorrichtung sind bekannt. Vermittels einer Clips-Verbindung wird das erste Halteteil mit dem zweiten Halteteil verbunden und fixiert. Bei der Clips-Verbindung sind erstes Halteteil und zweites Halteteil jedoch nur mit einem bestimmten Abstand zueinander fixierbar, sodass derartige Vorrichtungen nur für Akkuzellen mit einer bestimmten Geometrie, insbesondere einer bestimmten Höhe, Verwendung finden können.

Bei einer weiteren Vorrichtung wird die Verbindung des ersten Halteteils mit dem zweiten Halteteil über eine Schraubverbindung hergestellt, was aber zeitaufwendig ist.

Aufgabe der Erfindung ist, eine Vorrichtung zu schaffen bei der die Montage vereinfacht ist.

Erfindungsgemäß wird diese Aufgabe durch eine Vorrichtung gelöst, bei der in einer Fügerichtung erstreckte Vorsprünge des ersten Halteteils mit einem nachgiebigen Außenumfang ausgebildet sind und so in Öffnungen des zweiten Halteteils einsteckbar und dort klemmschlüssig fixierbar sind.

Die Öffnungen weisen zwar eine im Wesentlichen komplementär zu der Außenkontur der Vorsprünge ausgebildete Innenkontur auf, sie sind zu der Außenkontur jedoch geringfügig verjüngt, so dass die Vorsprünge des ersten Halteteils darin klemmschlüssig fixierbar sind.

Durch die Klemmung mittels der Vorsprünge ist es möglich, dass vermittels der erfindungsgemäßen Vorrichtung Akkuzellen unterschiedlicher Höhe gefasst werden können. Darüber hinaus ist der Montagevorgang wesentlich vereinfacht. Unter nachgiebigem Außenumfang wird verstanden, dass der Außenumfang quer zur Fügerichtung veränderbar, insbesondere verjüngbar ist.

Bei einer erfindungsgemäßen Weiterbildung der Vorrichtung sind die Vorsprünge stiftförmig ausgebildet. Die Vorsprünge erstrecken sich also in Fügerichtung von dem ersten Halteteil säulenartig in Richtung auf das zweite Halteteil. Von besonderem Vorteil ist dabei, dass die Vorrichtung kompakt und quer zur Fügerichtung offen ausgebildet werden kann.

Darüber hinaus ist bei einem Ausführungsbeispiel der Vorrichtung vorgesehen, dass der Außenumfang der Vorsprünge eine sich leicht verjüngende insbesondere konische Kontur aufweist. Dadurch sind die Vorsprünge in die Öffnungen gut einführbar, ohne exakt ausgerichtet werden zu müssen.

Vorzugsweise ist der sich verjüngende Außenumfang der Vorsprünge bezüglich der Fügerichtung um einen Winkel von 0,5° bis 3,0° geneigt.

Bevorzugt wird ein Ausführungsbeispiel der Vorrichtung bei der die Vorsprünge mindestens einen Schlitz aufweisen. Der mindestens eine Schlitz kann in Fügerichtung erstreckt sein. Er kann dabei durch den Vorsprung durchgehend ausgebildet sein, also den Vorsprung in Abschnitte unterteilen. Darüber hinaus wäre es denkbar, dass mehrere Schlitze vorgesehen sind, die beispielsweise eine Kreuzschlitz-Anordnung ergeben. Bevorzugt wird ein Vorsprung mit Schlitz, bei dem der Schlitz in Fügerichtung erstreckt ist und in Fügerichtung am freien Ende des Vorsprungs ausmündet, so dass dort aufeinander zu bewegbare, bzw. zusammendrückbare Abschnitte des Vorsprungs gebildet sind. Hierdurch wird der nachgiebige Außenumfang realisiert.

Ferner wird ein Ausführungsbeispiel der Vorrichtung bevorzugt, bei dem das erste Halteteil und die Vorsprünge einstückig oder aus separaten Einzelteilen ausgebildet sind. Die Vorsprünge und das erste Halteteil können also in einem einzigen gemeinsamen Spritzgussvorgang hergestellt werden oder aber in einer späteren Verarbeitung miteinander montiert werden. Von besonderen Vorteil dabei ist, dass das erste Halteteil und zweite Halteteil für unterschiedliche Akkuzellen, die in der Höhe stark voneinander abweichen, verwendet werden können, wobei lediglich auf der Höhe der Akkus entsprechend lange Vorsprünge zurückgegriffen werden muss.

Bei einer weiterführenden Fortbildung zuvor genannter Vorrichtung ist vorgesehen, dass das erste und/oder das zweite Halteteil Trennelemente aufweist, die jeweils zwei benachbarte Akkuzellen zueinander beabstanden. Die Trennelemente können einstückig aus dem ersten bzw. dem zweiten Halteteil ausgebildet sein oder als separate Einzelteile an das erste bzw. zweite Halteteil angebracht sein. Vorteilhaft ist, dass durch die Beabstandung zweier benachbarter Akkuzellen eine Berührung derselben miteinander ausgeschlossen ist, sodass auch Akkuzellen Verwendung finden können, die nicht elektrisch isoliert sind.

Darüber hinaus wird ein Ausführungsbeispiel der Vorrichtung bevorzugt, bei der die Öffnungen des zweiten Halteteils eine sich verjüngende Innenkontur aufweisen, und insbesondere konisch ausgebildet sind.

Bei einer vorteilhaften Weiterbildung der erfindungsgemäßen Vorrichtung weist das erste Halteteil und/oder das zweite Halteteil Einfassmittel auf, welche die Akkuzellen gegen eine Verschiebung quer zur Fügerichtung halten. Denkbar sind beispielsweise Einfassmittel die einstückig aus den Halteteilen ausgebildet sind oder Einfassmittel, die aus einem oder mehreren separaten Einzelteilen bestehen und in die Halteteile eingesetzt werden. Die Einfassmittel sind dabei so ausgebildet, dass sie eine Geometrie aufweisen, die komplementär zu der Geometrie der Akkuzelle ausgebildet ist, sodass die Akkuzellen formschlüssig durch das Einfassmittel angeordnet sind. Dadurch ist einem Wackeln der Akkuzellen in den Halteteilen vorgebeugt.

Besonders bevorzugt wird ein Ausführungsbeispiel der Vorrichtung bei dem die Einfassmittel als Ausnehmungen oder Vertiefungen im ersten und/oder im zweiten Halteteil ausgebildet sind. Die Einfassmittel sind also integraler Bestandteil des ersten und/oder zweiten Halteteils was es erlaubt, die Vorrichtung besonders kompakt und bauteilarm auszugestalten.

In Weiterbildung des vorhergehenden Erfindungsgedankens weisen die Einfassmittel in Fügerichtung jeweils eine das erste und/oder zweite Halteteil durchgreifende Aussparung auf, sodass eine Akkuzelle von außen zugänglich ist. Dadurch ist eine Kontaktierung oder auch Verschweißung der Akkuzellen untereinander, beispielsweise mit Kontaktblechen, möglich.

Darüber hinaus wird ein Ausführungsbeispiel der Vorrichtung vorgeschlagen, bei dem das erste und/oder zweite Halteteil vorzugsweise einschließlich der Vorsprünge als Kunststoffspritzgussteil ausgebildet ist.

Besonders vorteilhaft ist es, wenn das erste und/oder das zweite Halteteil in Fügerichtung einen Endanschlag aufweist. Durch das Vorsehen eines Endanschlages kann die Vorrichtung an Akkuzellen mit definierter Größe angepasst werden, sodass sie im montierten Zustand eine vordefinierte Höhe aufweist.

Schließlich wird ein Ausführungsbeispiel der Vorrichtung bevorzugt, das sich dadurch auszeichnet, dass der Endanschlag mittels einer Abstufung an den Vorsprüngen quer zur Fügerichtung gebildet ist.

Weitere Merkmale, Einzelheiten und Vorteile der Erfindung ergeben sich aus den beigefügten Patentansprüchen und der zeichnerischen Darstellung und nachfolgender Beschreibung einer bevorzugten Ausführungsform der Erfindung.

In der Zeichnung zeigt:
Figur 1 eine perspektivische Darstellung eines ersten Halteteils einer erfindungsgemäßen Vorrichtung;
Figur 2 eine perspektivische Darstellung eines zweiten Halteteils der erfindungsgemäßen Vorrichtung;
Figur 3 eine perspektivische Darstellung der erfindungsgemäßen Vorrichtung im montierten Zustand.

Aus den Figuren ist eine Vorrichtung 2 zur Halterung von Akkuzellen 4 bei einem Akkupack ersichtlich bei der ein erstes Halteteil 6 mit einem zweiten Halteteil 8 verbindbar ist. Das erstes Halteteil 6 weist dabei in eine Fügerichtung 10 erstreckte Vorsprünge 12 auf, die in Öffnungen 14 des zweiten Halteteils 8 einsteckbar und dort klemmschlüssig fixierbar sind.

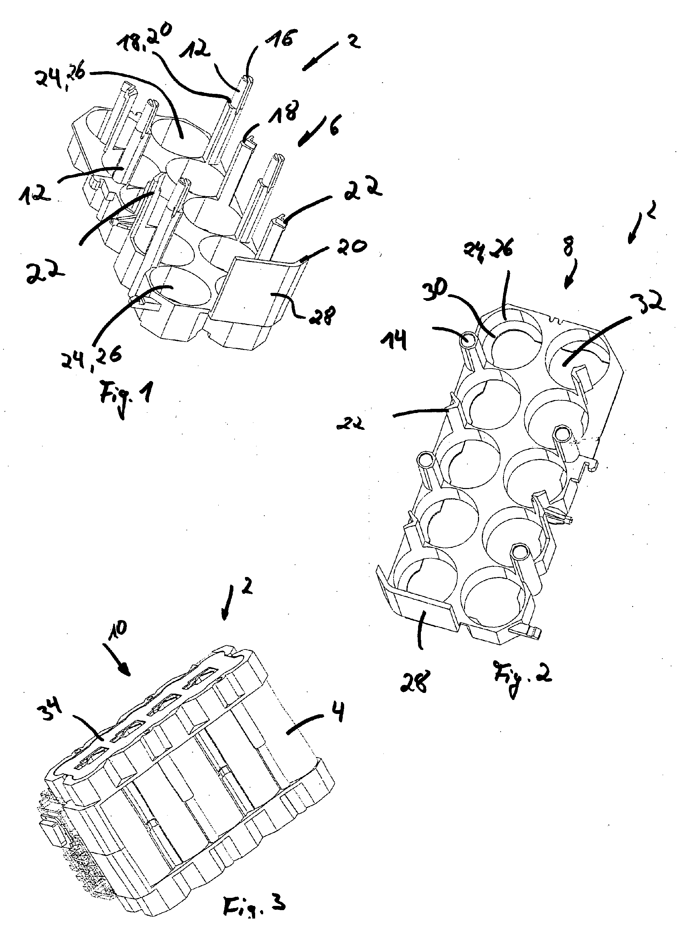

Figur 1 zeigt das erste Halteteil 6 der Vorrichtung 2 bei dem die Vorsprünge 12 einstückig mit dem ersten Halteteil 6 ausgebildet sind. Die Vorsprünge 12 weisen dabei eine konische Außenkontur und einen in Fügerichtung zum freien Ende hin randoffenen Schlitz 16 auf. Vermittels des randoffenen Schlitzes 16 ist es möglich, den jeweiligen Vorsprung 12 zusammen zu drücken, indem die durch den Schlitz 16 erzeugten Abschnitte aufeinander zu bewegt werden. Dadurch wird der nachgiebige Außenumfang gebildet.

Darüber hinaus weisen die Vorsprünge 12 jeweils einen als Abstufung 18 ausgebildeten Endanschlag 20 auf.

Zusätzlich zu den Vorsprüngen 12 sind am ersten Halteteil 6 Trennelemente 22 angeordnet, welche die Akkuzellen 4 im eingebauten Zustand zueinander beabstanden. Die Trennelemente 22 weisen dabei ebenfalls Abstufungen 18 wie die Vorsprünge 12 auf, die als Endanschlag dienen können.

Trennelemente 22 und Vorsprünge 12 sind zwischen Einfassmitteln 24 des ersten Halteteils 6 angeordnet und beabstanden in Figur 1 nicht dargestellte Akkuzellen 4 zueinander. Die Einfassmittel 24 sind dabei von Vertiefungen 26 gebildet, die sich in Fügerichtung 10 erstrecken. Über die Einfassmittel 24 wird ein sicherer Halt der Akkuzellen 4 quer zur Fügerichtung gewährleistet. Darüber hinaus weist das erste Halteteil 6 einen durch eine Wandung 28 ausgebildeten Endanschlag 29 auf.

Figur 2 zeigt das zweite Halteteil 8 mit den komplementär zu den Vorsprüngen 12 ausgebildeten Öffnungen 14. Darüber hinaus weist auch das zweite Halteteil 8 Trennelemente 22 auf, die so ausgebildet sind, dass sie in einer Endstellung an den Abstufungen 18 der Trennelemente 22 des ersten Halteteils 6 anliegen. Auch bei dem zweiten Halteteil 8 sind durch Vertiefungen 26 gebildete Einfassmittel 24 vorgesehen.

Insbesondere aus Figur 2 ist ersichtlich, dass die Vertiefungen 26 in dem ersten Halteteils 6 und in dem zweiten Halteteil 8 als Durchgriff 32 ausgebildet, wobei aber ein axialer Materialrand 30 einem axialen Herausrutschen der Akkuzellen 4 entgegensteht. Durch diesen Durchgriff 32 hindurch sind die Akkuzellen 4 an ihren Kontaktstellen von außen zugänglich und kontaktierbar. Die Durchgriffe 32 sind sowohl im ersten Halteteil 6 als auch im zweiten Halteteil 8 ausgebildet.

Figur 3 zeigt die Vorrichtung 2 im montierten Zustand. Dabei sind die Akkuzellen 4 zwischen dem ersten Halteteil 6 und dem zweiten Halteteil 8 angeordnet. Erstes Halteteil 6 und zweites Halteteil 8 sind zusammengesteckt und liegen am Endanschlag 20 aneinander an, sodass eine weitere Verschiebung der beiden Halteteile in Fügerichtung 10 aufeinander zu nicht möglich ist. Darüber hinaus zeigt Figur 3, dass die Akkuzellen, nach Zusammenfügen des ersten Halteteils 6 und des zweiten Halteteils 8 vermittels eines Blechs 34 miteinander kontaktiert werden, so dass sie in einem Akkupack zusammenwirken.

## Patentansprüche

1. Vorrichtung (2) zur Halterung von Akkuzellen (4) bei einem Akkupack, insbesondere für ein Elektrohandwerkzeuggerät, mit einem ersten Halteteil (6) und einem zweiten Halteteil (8), die unter Zwischenordnung der Akkuzellen (4) fügbar und miteinander fixierbar sind, **dadurch gekennzeichnet, dass** in einer Fügerichtung (10) erstreckte Vorsprünge (12) des ersten Halteteils (6) mit einem nachgiebigen Außenumfang ausgebildet sind und so in Öffnungen (14) des zweiten Halteteils (8) einsteckbar und dort klemmschlüssig fixierbar sind.

2. Vorrichtung (2) nach Anspruch 1, **dadurch gekennzeichnet, dass** die Vorsprünge (12) stiftförmig ausgebildet sind.

3. Vorrichtung (2) nach Anspruch 1 oder 2, **dadurch gekennzeichnet, dass** der Außenumfang der Vorsprünge (12) sich verjüngt, insbesondere eine konische Kontur aufweist.

4. Vorrichtung (2) nach einem der vorhergehenden Ansprüche, **dadurch gekennzeichnet, dass** der sich verjüngende Außenumfang der Vorsprünge (12) mit der Fügerichtung (10) einen Winkel von 0,5° bis 3,0° einschließt.

5. Vorrichtung (2) nach einem der vorhergehenden Ansprüche, **dadurch gekennzeichnet, dass** die Vorsprünge (12) einen Schlitz (16) aufweisen.

6. Vorrichtung (2) nach einem der vorhergehenden Ansprüche, **dadurch gekennzeichnet, dass** das erste Halteteil (6) und die Vorsprünge (12) einstückig oder aus separaten Einzelteilen ausgebildet sind.

7. Vorrichtung (2) nach einem der vorhergehenden Ansprüche, **dadurch gekennzeichnet, dass** das erste (6) und/oder das zweite Halteteil (8) Trennelemente (22) aufweist, die jeweils zwei benachbarte Akkuzellen (4) zueinander beabstanden.

8. Vorrichtung (2) nach einem der vorhergehenden Ansprüche, **dadurch gekennzeichnet, dass** die Öffnungen (14) des zweiten Halteteils (8) eine sich verjüngenden Innenkontur aufweisen.

9. Vorrichtung (2) nach Anspruch 8, **dadurch gekennzeichnet, dass** die Innenkontur der Öffnungen (14) konisch ausgebildet ist.

10. Vorrichtung (2) nach einem der vorhergehenden Ansprüche, **dadurch gekennzeichnet, dass** das erste Halteteil (6) und/oder das zweite Halteteil (8) Einfassmittel (24) aufweist, welche die Akkuzellen (4) gegen eine Verschiebung quer zur Fügerichtung (10) halten.

11. Vorrichtung (2) nach Anspruch 10, **dadurch gekennzeichnet, dass** die Einfassmittel (24) als Ausnehmungen oder Vertiefungen (26) in dem ersten (6) und/oder zweiten Halteteil (8) ausgebildet sind.

12. Vorrichtung (2) nach einem der Ansprüche 10 oder 11, **dadurch gekennzeichnet, dass** die Einfassmittel (24) in Fügerichtung (10) jeweils eine das erste (6) und/oder zweite Halteteil (8) durchgreifende Aussparung (32) aufweisen, so dass eine Akkuzelle (4) über die Aussparung (32) von außen zugänglich ist.

13. Vorrichtung (2) nach einem der vorhergehenden Ansprüche, **dadurch gekennzeichnet, dass** erstes (6) und/oder zweites Halteteil (8) als Kunststoffspritzgussteil ausgebildet ist.

14. Vorrichtung (2) nach einem der vorhergehenden Ansprüche, **dadurch gekennzeichnet, dass** erstes (6) und/oder zweites Halteteil (8) in Fügerichtung (10) einen Endanschlag (20) aufweisen.

15. Vorrichtung (2) nach Anspruch 14, **dadurch gekennzeichnet, dass** der Endanschlag (20) durch eine Abstufung (18) an den Vorsprüngen (12) quer zur Fügerichtung (10) gebildet ist.
